# EUROPÄISCHE PATENTSCHRIFT

(11) **EP 2 345 524 B1**
(45) Veröffentlichungstag und Bekanntmachung des Hinweises auf die Patenterteilung: **06.01.2016**
(21) Anmeldenummer: 10192264.9
(22) Anmeldetag: 23.11.2010
(51) Int. Cl.: B29C 49/78, B29C 47/92, B29C 49/06

(54) **Messvorrichtung sowie -verfahren zum Bestimmen wenigstens eines Parameterwertes für den Betrieb einer Blasmaschine**
Measuring apparatus and method for determining at least one parameter value for the operation of a blow molding machine
Appareil et méthode de mesure pour déterminer au moins une valeur de paramètre pour le fonctionnement d'une machine de moulage par soufflage

(30) Priorität: 15.01.2010 DE 102010000941
(43) Veröffentlichungstag der Anmeldung: 20.07.2011
(73) Patentinhaber: Krones AG, 93073 Neutraubling (DE)
(72) Erfinder: Winzinger, Frank, 93049 Regensburg (DE)
(74) Vertreter: Grünecker Patent- und Rechtsanwälte PartG mbB

(56) Entgegenhaltungen:
- DE-A1-102007 022 386
- JP-A- 2000 062 013

## Beschreibung

Die vorliegende Erfindung betrifft eine Messvorrichtung und ein Verfahren zum Bestimmen wenigstens eines Parameterwertes für den Betrieb einer Blasmaschine, einer Abfüllmaschine und/oder einer Etikettiervorrichtung.

Für den korrekten Betrieb einer Blasmaschine, einer Abfüllmaschine und/oder einer Etikettiervorrichtung ist es üblicherweise nötig, die Werte verschiedener für den Betrieb der Anlagen relevanter Parameter zu bestimmen und gegebenenfalls zu korrigieren, wie in der DE 10 2007 022 386 offenbart wird. Beispielsweise ist es notwendig, den Blasdruck einer Blasmaschine zu kennen und einzustellen.

Da viele der Parameter zeitlich und räumlich variable Werte aufweisen können, werden häufig eine Vielzahl von ortsfesten Sensoren verwendet. Dies hat jedoch den Nachteil, dass der Materialaufwand hoch ist und eine komplexe Schaltung notwendig ist, um die von den Sensoren gemessenen Werte auszulesen und in einem Steuerungselement zu verarbeiten.

Daher ist Aufgabe der vorliegenden Erfindung, eine Messvorrichtung und ein Verfahren bereitzustellen, welche ein einfacheres Bestimmen wenigstens eines Parameterwertes für den Betrieb einer Blasmaschine, einer Anfüllanlage und/oder einer Etikettiervorrichtung ermöglicht. Diese Aufgabe wird durch den Gegenstand der Patentansprüche 1 und 8 gelöst.

Die erfindungsgemäße Messvorrichtung zum Bestimmen wenigstens eines Parameterwertes für den Betrieb einer Blasmaschine, einer Abfüllmaschine und/oder einer Etikettiervorrichtung, umfasst wenigstens ein Messelement zum Bestimmen des wenigstens einen Parameterwertes und einem Vorformlingsdummy, wobei das wenigstens eine Messelement im und/oder am Vorformlingsdummy angeordnet ist.

Der Vorformlingsdummy kann durch die Blasmaschine, die Abfüllmaschine und/oder die Etikettiervorrichtung bewegt werden und dabei kann das Messelement den Wert wenigstens eines Parameters bestimmen. Dadurch kann in vereinfachter Art und Weise eine Messung eines orts-und/oder zeitabhängigen Parameters durchgeführt werden.

Vorformlinge oder Preforms werden üblicherweise zur Herstellung von Kunststoffbehältnissen mittels einer Blasmaschine verwendet. Dafür werden die Vorformlinge in die Blasmaschine eingebracht, gegebenenfalls erhitzt oder anderweitig vorbehandelt und dann mit einer Druckluft beaufschlagt, so dass ein Teil der Mantelfläche des Vorformlings in eine Blasform expandiert wird.

Als Vorformlingsdummy wird hier ein Element bezeichnet, welches die Form eines Vorformlings aufweist. Ein Vorformlingsdummy kann auch dieselben Abmessungen wie ein Vorformling aufweisen. Insbesondere kann ein Vorformlingsdummy auch dasselbe Material wie ein Vorformling umfassen. Der Vorformlingsdummy kann auch einem Vorformling entsprechen. Insbesondere kann der Vorformlingsdummy im Wesentlichen rund sein.

Mit anderen Worten kann die Messvorrichtung in Form eines Vorformlings ausgebildet sein, also die geometrische Form eines Vorformlings (Preforms) aufweisen. Dadurch ist es möglich, die Messvorrichtung wenigstens teilweise mit derselben Transportvorrichtung zu bewegen, mit der auch die zu bearbeitenden Artikel bewegt werden.

Der Vorformlingsdummy kann einen Mündungsbereich oder eine Mündung aufweisen, insbesondere wobei der Mündungsbereich eine nach außen weisende Öffnung des Vorformlingsdummys umfasst.

Es wäre auch denkbar, dass der Vorformlingsdummy zwei Mündungen mit nach außen weisenden Öffnungen aufweist.

Der Vorformlingsdummy kann einen Tragring aufweisen, mittels dessen die Messvorrichtung in eine Transportvorrichtung der Blasmaschine, der Etikettiervorrichtung und/oder der Abfüllmaschine eingebracht werden kann. Mit anderen Worten kann der Tragring dem Handling dienen. Beispielsweise kann die Messvorrichtung an dem Tragring in Führungsschienen gehängt und beispielsweise mit Hilfe von Luft fortbewegt, mittels Haltedornen von innen gegriffen, und/oder mittels Klammern von außen gegriffen werden. Die Messvorrichtung kann also mittels Neckhandling durch die Blasmaschine, die Abfüllmaschine und/oder die Etikettiervorrichtung bewegt werden. Alternativ oder zusätzlich ist auch Basehandling, insbesondere in der Etikettiervorrichtung oder bei einem Packer, in dem u.a. mehrere Messvorrichtungen zu einem Gebinde angeordnet werden, möglich.

In einer Ausführungsform weist nur die Mündung des Vorformlingsdummys die gleiche Kontur oder Form wie ein Vorformling auf, der zur Produktion von Flaschen verwendet wird. In diesem Fall kann die Länge des Vorformlingsdummys insbesondere länger sein als die der Vorformlinge, die, insbesondere mittels der Transportvorrichtung, im produzierenden Betrieb eingesetzt werden.

Ein Innendurchmesser der Mündung und/oder ein Außendurchmesser der Mündung am Vorformlingsdummy kann variabel einstellbar sein. Dadurch können bei Formatwechseln der Abfüllanlage auf andere Flaschengrößen dieselben Vorformlingsdummys eingesetzt werden. Dies kann beispielsweise über ein Anbringen oder Verschrauben zusätzlicher Formatteile wie z.B. Hülsen erfolgen. Es wäre aber auch denkbar, die komplette Mündung zu tauschen. Hierzu kann die Mündung mittels eines Gewindes mit einem Grundkörper des Vorformlingsdummys verbunden werden.

Die Innenoberflächen oder Außenoberflächen des Vorformlingsdummys können Rastelemente aufweisen, die zum Einrasten der angreifenden Transportvorrichtungen dienen. Die Rastelemente können insbesondere Vorsprünge oder Nuten sein. Auf diese Weise kann ein größeres Gewicht der Messvorrichtung gegenüber den in der Produktion eingesetzten Vorformlingen ausgeglichen und ein Abrutschen, insbesondere beim Transport mittels eines Innengreifers, der üblicherweise nur kraftschlüssig greift, verhindert werden. In anderen Worten kann der Vorformlingsdummy Mittel zur formschlüssigen Aufnahme zum Transport aufweisen.

Außerdem kann dadurch die Messvorrichtung auch wenigstens teilweise durch ein Element oder eine Behandlungseinheit bearbeitet werden, mit dem auch die zu bearbeitenden Artikel bearbeitet werden. Ein solches Element kann beispielsweise ein Ofen, eine Reckstange, eine Blasdüse, ein Füllelement, ein Verschließelement und/oder ein Etikettiermodul sein. Die Elemente können also jegliche Art von Behandlungseinheiten darstellen, weitere Beispiele sind Transportklammern (Außengreifer), Transportdorne (Innengreifer), Heizeinrichtungen, Sterilisierungseinheiten, Füllventile, Spüldüsen oder -lanzen (z.B. zum Rinsen) oder Blasstationen zum Expandieren von Vorformlingen mit zugehörigen Blasformen, Blasdüsen oder Reckstangen aber auch Verschließköpfe oder Etikettieraggregate (z.B. Drehteller, Etikettenspender).Die Abmessungen der Messvorrichtung, insbesondere des Vorformlingsdummys, können den Abmessungen eines Vorformlings oder den Abmessungen eines in der Etikettiervorrichtung und/oder der Abfüllmaschine zu bearbeitenden Artikels, insbesondere einer Flasche, entsprechen. Auch andere Größen sind für den Vorformlingsdummy grundsätzlich denkbar, wobei eine maximale/minimale Größe durch die maximalen/minimalen Abmessungen eines Transportwegs durch die Blasmaschine, die Abfüllmaschine und/oder die Etikettiervorrichtung bestimmt wird. Beispielhafte Abmessungen sind für einen Innendurchmesser der Mündung 8 mm bis 50 mm, für einen Außendurchmesser der Mündung 9 mm bis 51 mm, für einen Außendurchmesser eines Tragrings 10 mm bis 52 mm und für die Gesamtlänge des Vorformlingsdummys 30 mm bis 500 mm. Ein Außendurchmesser am Körper der Messvorrichtung kann im Bereich von 8 mm bis 400 mm liegen. Eine Höhe einer Mündung (vom Bereich des Tragrings bis in Richtung des Verschlussabschnitts zur Oberkante, also bis zu einer nach außen weisenden Öffnung des Vorformlingsdummys) kann zwischen 4 mm und 100 mm betragen. Ein Tragring ist jedoch nicht unbedingt nötig. Der Vorformlingsdummy kann auch einen zwischen dem Tragring und der nach außen weisenden Öffnung angeordneten Verschlussring aufweisen. Der Tragring könnte aber auch die Funktion des Verschlussrings übernehmen.

Der Vorformlingsdummy kann eine äußere und/oder eine innere Oberfläche aufweisen, wobei das wenigstens eine Messelement an der äußeren und/oder der inneren Oberfläche angeordnet ist.

Die Messvorrichtung kann außerdem ein Sendeelement zum Senden des wenigstens einen von Messelement bestimmten Parameterwertes an ein Auswerteelement umfassen. Dadurch kann der Parameterwert nach der Messung direkt an ein Auswerteelement übermittelt werden, und dort zur Regelung der Anlage verwendet werden.

Das Sendeelement kann insbesondere einem RFID-Chip, einem W-LAN-Sender, einem Bluetooth- oder einem Infrarotelement entsprechen.

Die Messvorrichtung kann außerdem ein Speicherelement zum Speichern des wenigstens einen vom Messelement bestimmten Parameterwertes umfassen. Dadurch können ein oder mehrere Messwerte im Speicherelement gespeichert werden, und nach dem Durchlauf der Messvorrichtung durch die Blasmaschine, die Abfüllmaschine und/oder die Etikettiervorrichtung kann dieses Speicherelement von einer Auslesevorrichtung ausgelesen werden und die gespeicherten Messwerte entweder einem externen Speicher oder einem Auswerteelement zur weiteren Verarbeitung zugeführt werden.

Das Speicherelement kann insbesondere ein digitales Speichermedium sein, insbesondere wobei das digitale Speichermedium nach dem Prinzip der Flash-Speicherung arbeitet.

Die Messvorrichtung kann insbesondere eine Schnittstelle, insbesondere eine USB-Schnittstelle, zum Verbinden des Speicherelements mit einem Auswerteelement und/oder einem externen Speicherelement umfassen.

Die Messvorrichtung kann außerdem ein Prozessorelement, insbesondere eine CPU, zum Verarbeiten des vom Messelement bestimmten Parameterwertes aufweisen. Das Prozessorelement kann auch eine Speicherprogrammierbare Steuerung (SPS) sein.

Die Messvorrichtung kann außerdem ein Energieversorgungselement zum Versorgen des wenigstens einen Messelement, des Sendeelements, des Speicherelements, Prozessorelements und/oder der Schnittstelle mit elektrischer Energie umfassen. Mit anderen Worten kann die Messvorrichtung über eine eigene Energieversorgung verfügen. Das Energieversorgungselement kann insbesondere eine Batterie, beispielsweise eine Knopfzelle, sein.

Der wenigstens eine Parameterwert kann ein Druckwert, ein Temperaturwert, ein Wert einer Kraft, ein Wert eines Momentes, ein Positionswert, eine Zeitdauer, eine Durchflussmenge, ein Formatwert, ein Geschwindigkeitswert, ein Strahlungswert (z.B. Mikrowellenstrahlung), insbesondere ein Strahlungsstärkewert, und/oder eine Keimanzahl sein. Mit anderen Worten kann das wenigstens eine Messelement so ausgebildet sein, dass es einen Druckwert, einen Temperaturwert, einen Wert einer Kraft, einen Wert eines Moments, einen Positionswert, eine Zeitdauer, eine Gas- oder Flüssigkeitsmenge (z.B. einen Volumenwert), eine Geschwindigkeit, eine Strahlungsstärke oder Feldstärke und/oder eine Keimanzahl messen kann. Die Messvorrichtung kann insbesondere mehrere Messelemente umfassen, wobei jedes der Messelemente einen oder mehrere der oben genannten Werte bestimmen oder messen kann. Insbesondere kann die Messvorrichtung mehrere Messelemente des gleichen Typs umfassen.

Der Formatwert steht dabei für bestimmte geometrische oder chemische Werte, die sich auf eine oder mehrere geometrische Größen oder eine materielle Zusammensetzung von zu produzierenden Flaschen oder Vorformlingen beziehen, die wiederum bestimmten Formatteilen, insbesondere Behandlungseinheiten, der Blasmaschine, der Abfüllmaschine und/oder der Etikettiervorrichtung zugeordnet sein können.

Der wenigstens eine Parameterwert kann insbesondere einem physikalischen Behandlungsparameter von Behältnissen (Preforms und/oder Flaschen) in einer Blasmaschine, einer Abfüllmaschine (Füller) und/oder einer Etikettiervorrichtung entsprechen.

Die Messvorrichtung kann Standbeine aufweisen, um für einen stehenden Transport geeignet zu sein.

Die Messvorrichtung kann einen verformbaren Mündungsbereich aufweisen. Damit kann beispielsweise eine Innengreiferklemmung, z.B. eine Heizdornklemmung analysiert werden. Als Drucksensoren hierfür können insbesondere piezoresistive/elektrische Drucksensoren verwendet werden

Die Messvorrichtung kann wenigstens teilweise aus einem Leichtmetall, einer Keramik und/oder einem wärmebeständigen Kunststoff gefertigt sein.

Die Messvorrichtung kann außerdem eine oder mehrere im und/oder am Vorformlingsdummy angebrachte Einstelleinrichtungen umfassen, die so ausgebildet sind, dass bei dem Transport der Messvorrichtung durch eine Abfüllanlage bestimmte Behandlungseinheiten auf ein anderes Format umgestellt werden können.

Hierzu könnten beispielsweise bestimmte Behandlungseinheiten mit mindestens zwei Rastungen versehen werden. Durch das Behandeln des Vorformlingsdummys rasten die Behandlungseinheiten in bestimmte Stellungen ein, die für ein vorgesehenes Behältnisformat bzw. Vorformlingsformat benötigt werden. Dies kann durch eine bestimmte geometrische Form des Vorformlingsdummys an geeigneter Position geschehen. Es wäre auch denkbar bei dem Vorformlingsdummy auf Messelemente zu verzichten und nur über am Vorformlingsdummy angebrachte Einstelleinrichtungen bei dem Transport durch bestimmte Maschinen einer Abfüllanlage bestimmte Behandlungseinheiten auf ein anderes Format umzustellen. Insbesondere kann am und/oder im Vorformlingsdummy ein aktives oder passives Sendeelement angeordnet sein (z.B. ein RFID-Chip), das zu einer automatischen Formatumstellung die entsprechend benötigten Formatinformationen an die einzelnen Maschinen einer Abfüllanlage sendet. Insbesondere sind für einen derartigen Einsatz keine Messelemente am Vorformlingsdummy angeordnet.

Die Erfindung stellt außerdem ein Verfahren zum Bestimmen wenigstens eines Parameterwertes für den Betrieb einer Blasmaschine, einer Abfüllmaschine und/oder einer Etikettiervorrichtung, bereit, umfassend die Schritte Bereitstellen einer oben beschriebenen Messvorrichtung, Einbringen der Messvorrichtung in die Blasmaschine, die Abfüllmaschine und/oder die Etikettiervorrichtung und Bestimmen des wenigstens einen Parameterwertes.

Die Messvorrichtung kann insbesondere durch die Blasmaschine, die Abfüllmaschine und/oder die Etikettiervorrichtung bewegt werden. Während des Bewegens der Messvorrichtung durch die Blasmaschine, die Abfüllmaschine und/oder die Etikettiervorrichtung kann das wenigstens eine Messelement der Messvorrichtung den wenigstens einen Parameterwert erfassen.

Die Messvorrichtung kann in der Blasmaschine, der Abfüllmaschine und/oder der Etikettiervorrichtung wenigstens teilweise durch eine Transportvorrichtung bewegt werden, mit welcher im Betrieb die zu bearbeitenden Artikel bewegt werden. Dadurch kann das Verfahren vereinfacht werden, da keine eigenen, beziehungsweise zusätzlichen Transportvorrichtungen für die Messvorrichtung vorgesehen werden müssen.

Die Messvorrichtung kann in der Blasmaschine, in der Abfüllmaschine und/oder der Etikettiervorrichtung wenigstens teilweise durch ein Element bearbeitet werden, mit welchem die zu bearbeitenden Artikel im Betrieb bearbeitet werden. Dadurch ist es möglich, Betriebsparameter der bearbeitenden Elemente zu bestimmen.

Es können mehrere Messvorrichtungen in die Blasmaschine, die Abfüllmaschine und/oder die Etikettiervorrichtung eingebracht werden, insbesondere wobei jede der Messvorrichtungen den Wert eines anderen Parameters bestimmt.

Es können auch wenigstens zwei Messvorrichtungen in die Blasmaschine, die Abfüllmaschine und/oder die Etikettiervorrichtung eingebracht werden, die den Wert desselben Parameters bestimmen. Es kann dann der Unterschied zwischen den bestimmten Parameterwerten bestimmt werden.

Dadurch kann der zeitliche Verlauf eines Parameterwertes bestimmt werden. Jede der Messvorrichtungen kann insbesondere eines oder mehrere der oben beschriebenen Merkmale aufweisen.

Das Verfahren kann außerdem ein Übermitteln des wenigstens einen Parameterwertes an ein Auswerteelement umfassen. Insbesondere kann das Übermitteln des wenigstens einen Parameterwertes über W-LAN, Bluetooth, Infrarot- oder Radiowellen stattfinden. Es können auch an vorherbestimmten Positionen der Blasmaschine, der Abfüllmaschine und/oder der Etikettiervorrichtung oder dazwischen Ausleseelemente vorgesehen sein, wobei die Ausleseelemente den wenigstens einen bestimmten Parameterwert über W-LAN, Bluetooth, Infrarot- oder Radiowellen von der Messvorrichtung auslesen oder abfragen.

Alternativ kann die Messvorrichtung aus der Blasmaschine, der Abfüllmaschine und/oder Etikettiervorrichtung ausgeschleust werden und einer Ausleseeinheit zugeführt werden. In der Ausleseeinheit kann ein Speicherelement der Messvorrichtung ausgelesen werden.

Der wenigstens eine bestimmte Parameterwert kann zur Regelung der Blasmaschine, der Abfüllmaschine und/oder der Etikettiervorrichtung verwendet werden. Beispielsweise kann eine Einstellung der Anlage basierend auf dem wenigstens einen bestimmten Parameterwert korrigiert werden. Insbesondere können einzelne Heizstationen, Blasstationen, Füllventile und/oder Etikettieraggregate basierend auf dem wenigstens einen bestimmten Parameterwert geregelt oder gesteuert werden.

Es können dabei Stellgrößen der Heizstationen oder der Blasstationen veränderbar sein. Hierzu kann die Abfüllanlage, also ein System umfassend eine Blasmaschine, eine Abfüllmaschine und/oder eine Etikettiervorrichtung, eine Regeleinheit aufweisen, welche derart ausgebildet ist, dass sie die Stellgrößen in Abhängigkeit von einer oder mehrerer Messgrößen regelt. Insbesondere kann die Regelung eine Zuordnungseinrichtung aufweisen, welche vorgegebenen Messgrößen Stellgrößen zuordnet. Dem System können auch weitere Maschinen zugeordnet werden.

In einer Anlage können die einzelnen Maschinen der Blasmaschine, der Abfüllmaschine und/oder der Etikettiervorrichtung mehrere Behandlungseinheiten umfassen, die die Vorformlinge bzw. Behälter in gleicher weise Behandeln. Diese können insbesondere nebeneinander in einzelnen Karussellen angeordnet sein.

Eine oder mehrere Behandlungseinheiten der Blasmaschine, der Abfüllmaschine und/oder der Etikettiervorrichtung, insbesondere gleichartige Behandlungseinheiten, können, insbesondere unabhängig voneinander, basierend auf dem wenigstens einen bestimmten Parameterwert geregelt werden.

Die Regelung kann derart ausgebildet sein, dass sie eine oder mehrere Messungen genau der Behandlungseinheit zuordnet, die die Behandlung durchgeführt hat. Auf diese Weise können einzelne Behandlungseinheiten desselben Typs (insbesondere auf dem selben Karussell) unterschiedlich geregelt werden. Insbesondere können dadurch Schaltzeiten für Drücke in der Blasmaschine, Reckparameter bestimmter Blasformen und Heizleistungen bestimmter Heizstationen und bestimmter Heizschichten bestimmt und geregelt werden.

Unter Anderem ist es in diesem Bezug vorteilhaft, mindestens so viele Messvorrichtungen in einem Messzyklus in der Abfüllanlage vorzusehen, wie Behandlungseinheiten auf dem Karussel mit den meisten Behandlungseinheiten vorhanden sind. Denkbar wäre aber auch eine Rückführung einzelner Messvorrichtungen und mindestens einen weiteren Durchlauf vorzusehen, bei dem dieselben Messvorrichtungen von den Behandlungseinheiten eines Karussells behandelt werden, von denen sie bei einem ersteren Durchlauf nicht behandelt wurden.

Durch die Messvorrichtung können dem Bediener auch einzelne Behandlungseinheiten angezeigt werden (Fehlermeldung), die ein falsches Format für die in der kommenden Produktion verwendeten Behältnisse aufweisen.

Insbesondere wird mindestens eine Messvorrichtung vor einem Produktionsbeginn durch mindestens eine Maschine der Anlage gefahren.

In einer weiteren Ausführungsform können von der Messvorrichtung auch ein Vorspanndruck oder Gegendruck, aber auch ein Unterdruck innerhalb einer Abfüllmaschine gemessen und/oder geregelt werden. Es wäre aber auch denkbar, eine Durchflussmessung bestimmter Gase, mit denen die Messvorrichtung behandelt wird, durchzuführen, beispielsweise von eingebrachten Kohlenstoffdioxid während und/oder nach einer Abfüllung oder ionisierter Luft während einer Sterilisation. Der Durchfluss kann auch geregelt werden. Bei der Durchflussmessung von Gasen kann der Vorformlingsdummy mit einer zweiten Öffnung für das Entweichen von Gasen versehen werden. Der Vorformlingsdummy kann hierzu einen Durchflussmesser aufweisen.

Ebenso können Temperaturen während des Sterilisierens, des Befüllens mit einem Produkt und/oder Rinsens erfasst und/oder geregelt

Die vorliegende Erfindung stellt außerdem ein System bereit, umfassend eine Blasmaschine, eine Abfüllmaschine und/oder eine Etikettiervorrichtung sowie ein Ausschleuse- und/oder Einschleuseelement zum Ausschleusen bzw. Einschleusen einer oben beschriebenen Messvorrichtung.

Das System kann außerdem ein Steuerungselement oder Regelungselement umfassen, das derart ausgebildet ist, dass der wenigstens eine bestimmte Parameterwert zur Regelung der Blasmaschine, der Abfüllmaschine und/oder der Etikettiervorrichtung wie oben beschrieben verwendet werden kann.

Weitere Merkmale und Vorteile werden nachfolgend anhand der beispielhaften Figuren erläutert. Dabei zeigt:
- Fig. 1: eine erste beispielhafte Messvorrichtung;
- Fig. 2: eine zweite beispielhafte Messvorrichtung;
- Fig. 3: eine dritte beispielhaften Messvorrichtung;
- Fig. 4: eine vierte beispielhafte Messvorrichtung;
- Fig. 5: eine fünfte beispielhafte Messvorrichtung;
- Fig. 6: einen Querschnitt einer sechsten beispielhaften Messvorrichtung in einer Blasform;
- Fig. 7: einen zweiten Querschnitt der sechsten beispielhaften Messvorrichtung in einer Blasform;
- Fig. 8: eine beispielhafte Vorrichtung umfassend eine Einschleuseeinrichtung zum Einschleusen einer beispielhaften Messvorrichtung;
- Fig. 9: eine beispielhafte Einschleuseeinrichtung zum Einschleusen einer Messvorrichtung; und
- Fig. 10: eine Illustration eines Systems, umfassend eine Blasmaschine, eine Abfüllmaschine und/oder Etikettiervorrichtung, in welcher eine beispielhafte Messvorrichtung verwendet werden kann.

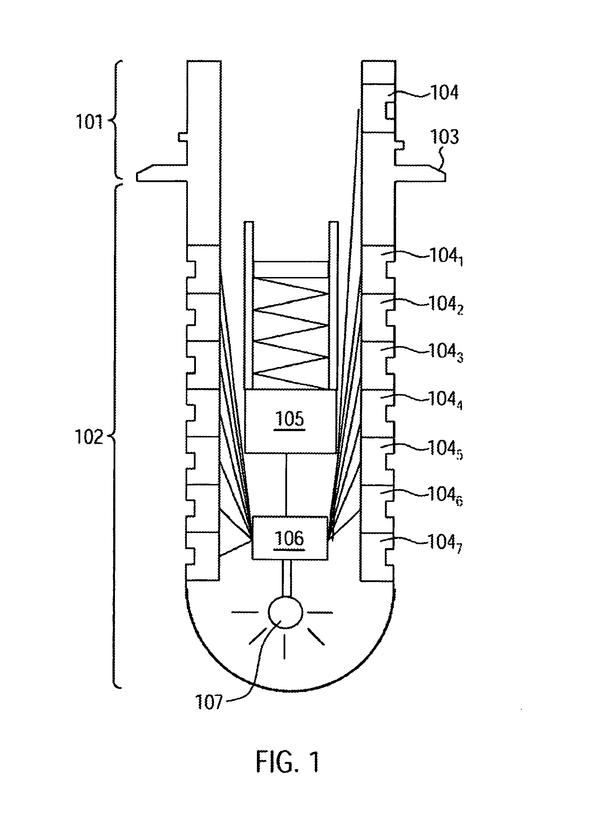

Fig. 1 zeigt eine beispielhafte Messvorrichtung zum Bestimmen wenigstens eines Parameterwertes für den Betrieb einer Blasmaschine, einer Abfüllmaschine und/oder einer Etikettiervorrichtung. Die Messvorrichtung weist eine Preformgeometrie oder Vorformlingsgeometrie auf. Mit anderen Worten ist die Messvorrichtung in Form eines Vorformlings, insbesondere eines Kunststoffvorformlings einer Blasmaschine, ausgebildet. Die Messvorrichtung kann wenigstens teilweise aus einem Leichtmetall, einer Keramik und/oder einem wärmebeständigen Kunststoff gefertigt sein. Die Sensoren können aus den jeweils handelsüblichen Materialien bestehen und mit dem Vorformlingsdummy verbunden sein.

Die beispielhafte Messvorrichtung weist einen Mündungsbereich 101 und einen Mantelbereich 102 auf. An der Oberfläche und innerhalb des Vorformlingsdummys in Fig. 1 sind Messelemente angeordnet. Insbesondere sind Pyrometer 104 und 104-1 bis 104-7 am Vorformlingsdummy angeordnet. Diese Pyrometer 104 und 104-1 bis 104-7 ermöglichen die Bestimmung einer Temperatur beispielsweise in einem Heiztunnel einer Blasmaschine. Alternativ oder zusätzlich können auch Pyrometer im Inneren der Messvorrichtung vorgesehen sein, um die Heizleistung von eintauchenden Heizstäben zu messen. Die Messvorrichtung kann nicht nur zur Messung der Temperatur in einem Heizertunnel, sondern beispielsweise auch zur Messung der Temperatur in einer Heiztasche verwendet werden. Es können auch Sensoren zur Messung der Intensität von Mikrowellenstrahlung vorgesehen sein.

Die beispielhafte Messvorrichtung in Fig. 1 umfasst außerdem einen Reckstangenkraftsensor 105. Außerdem können Elemente vorgesehen sein, mit denen die Anpresskraft einer Blasdüse gemessen wird.

Fig. 1 zeigt außerdem einen Speicherchip 106, in welchem die gemessenen Daten der Messelemente gespeichert werden können, sowie eine Sendeantenne 107, welche es erlaubt, die gespeicherten und gemessenen Daten an ein Auswerteelement zu übermitteln. Die Messvorrichtung kann außerdem ein Prozessorelement, insbesondere eine CPU, zum Verarbeiten der von den Messelementen bestimmten Parameterwerte aufweisen.

Der Vorformlingsdummy in Fig. 1 umfasst außerdem einen Tragring 103, mittels dessen die Messvorrichtung beispielsweise in eine Transportvorrichtung der Blasmaschine, der Etikettiervorrichtung und/oder der Abfüllmaschine eingebracht werden kann. Der Mündungsbereich 101 kann auch ein Gewinde für einen Gefäßverschluss umfassen. Der Tragring 103 dient insbesondere zur genauen Positionierung des Vorformlingsdummys an Transportvorrichtungen.

Der Mündungsbereich 101 kann auch verformbar ausgebildet sein. Damit kann beispielsweise die Heizdornklemmung analysiert werden. Insbesondere kann dadurch bestimmt werden, ob zentrisch und/oder senkrecht gegriffen wird.

Die Messvorrichtung in Fig. 1 weist mehrere Elemente zur Temperaturmessung also zur Bestimmung eines Temperaturwertes, sowie ein Element zur Messung der Reckstangenkraft einer Blasmaschine auf. Es sind jedoch noch viele weitere Parameter möglich, für welche ein Wert unter Zuhilfenahme eines entsprechenden Messelements bestimmt werden kann.

Beispielsweise kann der Energieeintrag in verschiedenen Heizschichten im Ofen einer Blasmaschine, ein Vorblasdruck, ein Zwischenblasdruck, ein Fertigblasdruck, eine Anpresskraft einer Blasdüse, der zeitliche Beginn des Vorblasdrucks, die Dauer des Vorblasdrucks und/oder die verbrauchte Luftmenge bestimmt werden. Bei Hotfillmaschinen kann die Spülzeit bestimmt werden. Wenn nach dem Spülen eine Referenzwärmemenge noch zu groß ist, kann daraufhin die Spülzeit vergrößert werden.

Die Dauer einer Heizzeit kann in Form eines Heizleistungszeitdiagramms festgestellt werden. Insbesondere kann die Heizzeit in einzelnen horizontalen oder vertikalen Schichten bestimmt und geregelt werden. Außerdem kann die Kraft mit der Transferklammern auf die Messvorrichtung wirken, bestimmt werden. Diese Kraft hat einen direkten Einfluss auf den Verschleiß. Au-βerdem kann ein Messelement für die Füllstandskontrolle, zur Aufzeichnung eines Druckverlaufs an Handlingstellen, zum Messen einer Fliehkraft an Rundläufern, zum Bestimmen eines Füllstands/Füllvolumens eines Produkts / Sterilisationsmittels / Stickstoffmenge (H₂O₂/Peressigsäure), zum Messen von Temperaturen in einer Blasform (Neckkühlung), zum Bestimmen einer Schließkraft der Blasform, zur Verschließer-Anpressdruck- und Drehmomentenmessung und/oder zur Messung einer durch eine Bodennachkühlung entzogenen Wärmemenge vorgesehen sein.

Ein Drehwinkel-Zeit-Diagramm (preferential heating) kann, insbesondere bei servoangetriebenen Heizdornen, bestimmt werden. Mittels optischer Sensoren kann eine Etikettenposition bestimmt werden.

Es kann auch die Position eines Artikels in einem Gebinde bestimmt werden und ein Roboter derart eingestellt werden, dass ein Artikel an die richtige Position in einem Gebinde angeordnet wird. Mit anderen Worten kann ein Messelement zur Bestimmung eines Positionswertes vorgesehen sein. Dies kann inline, also während der Produktion, oder offline, also vor der Produktion oder nach einem Produktionsstopp geschehen. Insbesondere im Inline-Fall kann ein Positionsmesswert an einen Roboter gesendet und dieser richtig eingestellt bzw. kalibriert werden. Hier kann es vorteilhaft sein, wenn der Vorformlingsdummy Standfüße aufweist, um für den Transport im Basehandling (auf Transportbändern für Gebinde) geeignet zu sein.

Die Messwerte der Messvorrichtung können verwendet werden, um die Anlage zu steuern oder zu regeln, insbesondere, um verschiedene Betriebsparameter einzustellen. Beispielsweise kann die Heizleistung verschiedener Heizstrahler im Ofen, die Drehanzahl eines Servoantriebs für eine Reckstange, die Leistung (Strom) die die Spulen eines Linearantriebs einer Reckstange beziehen, ein Domdruckregler für den Vorblasdruck, ein Domdruckregler für den Zwischenblasdruck, die Kompressorleistung und/oder ein Domdruckregler für den Fertigblasdruck (Soll: möglichst wenig Fertigblasdruck) und/oder ein Domdruckregler für den Druckkissendruck einer Blasform geregelt werden.

Außerdem kann die Drehzahl oder das Drehmoment eines Servoantriebs oder ein Domdruckregler für den Antrieb einer Reckstange und/oder einer Blasdüse, der Schaltzeitpunkt für ein Ventil für den Beginn des Vorblasdrucks, Schaltzeitpunkte für ein Ventil für die Dauer des Vorblasdruckes und/oder Schaltzeitpunkte für ein Spülventil bei Hotfillmaschinen eingestellt werden. Eine Bedienperson kann eine Druck-Zeit-Sollkurve festlegen (Maximal/Minimalwerte zu bestimmten Zeitpunkten), die zum Regeln verwendet werden kann.

Außerdem kann die Dauer der Heizzeit für Vorformlinge in der Heizstation festgelegt werden (auch hier kann eine Bedienperson eine Sollkurve zum Regeln festlegen), die Ventilschaltung der Sterilisationsmedien/Füllmedien kann geregelt werden (Zeitpunkt Öffnen/Schließen, Druck und Volumendurchlass (Auslass) von Ventil), die Ventilschaltung für Mixgeräte kann geregelt werden (für Produkt (CO₂-Konzentration) oder Konzentration der Sterilisierungsmedien), eine Leistungsanpassung der Anlage oder einzelner Maschinen (in Flaschen pro Stunde) kann stattfinden, die Drehwinkel-Zeit-Drehung der Servoantriebe von Heizdornen (preferential heating) kann eingestellt werden, insbesondere bei servoangetriebenen Heizdornen, die Stellmotorenbewegung zur Etikettenpositionsanpassung kann eingestellt werden und/oder Temperiergeräte können auf nötige Temperaturen für Blasluft, Medien zur Blasformentemperierung oder Produkt eingestellt werden.

Um eine Temperaturverteilung innerhalb eines Mündungsbereichs der Vorformlinge innerhalb der Heizeinrichtung einer Blasmaschine genau steuern zu können, kann eine weitere Möglichkeit darin bestehen, einen genauen Zeitpunkt eines Hebens oder Senkens einer Abschirmung für den Mündungsbereich von Vorformlingen zu regeln. Die Abschirmung besteht üblicherweise aus Hülsen oder Platten, die etwa in Höhe des Tragrings (meistens kurz darunter) der Vorformlinge angeordnet sind. Die Abschirmungen dienen als Barriere für die Wärmestrahlung und begleiten den Vorformling durch den Transport durch die Heizvorrichtung. Es kann jedoch dabei vorkommen, dass Material kurz unterhalb des Tragrings des Vorformling nicht genügend erwärmt wird und somit beispielsweise dieses bei dem darauffolgenden Blasvorgang nicht mitverstreckt wird und die Wanddicke der Behältnisse nicht ausreichend groß an bestimmten Stellen ist. Deswegen kann es nötig sein, die Abschirmung am Ende der Heizvorrichtung vom Tragring zu entfernen. So kann bei gleichzeitigem Heizen des Bereichs kurz unterhalb des Tragrings der Mündungsbereich der Vorformlinge relativ kühl bleiben, da kurz vor dem Expansionsvorgang keine Zeit mehr vorhanden ist, dass die Wärme vom Bereich kurz unterhalb des Tragrings in den restlichen Mündungsbereich übergeht. Bei einer Reglung der Zeit, in der der Mündungsbereich der Vorformlinge durch die Abschirmung geschützt wird, wäre es auch denkbar, dass sich nicht die Abschirmungen, sondern die Aufnahmedornen heben und senken und auf diese Weise der Bereich kurz unterhalb des Tragrings der Strahlung zugänglich wird.

Eine oder mehrere der oben genannten Einstellungen können auf Basis des wenigstens einen bestimmten Parameterwertes durchgeführt werden.

Das Einstellen oder Regeln der Maschinen kann durch eine Bedienperson und/oder über einen automatischen Regelkreis erfolgen. Die Regelung kann insbesondere durch ein Steuerungselement, beispielsweise eine speicherprogrammierbare Steuerung (SPS) oder einen Bediener-PC erfolgen.

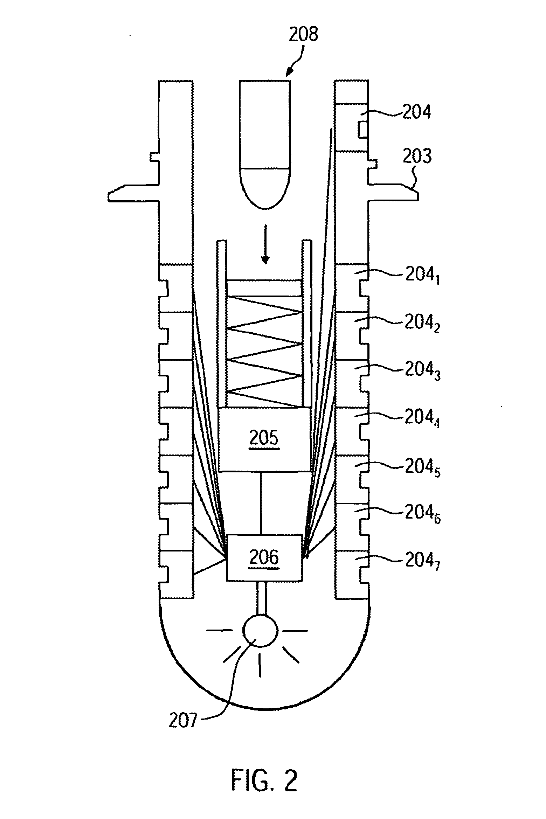

Fig. 2 zeigt die beispielhafte Messvorrichtung aus Fig. 1, wobei außerdem eine Reckstange 208 einer Blasmaschine gezeigt ist, die in die Messvorrichtung eingebracht wird. Mit Hilfe des Reckstangenkraftsensors 205 ist es möglich, eine Weg-Zeit-Kraftmessung durchzuführen. Beispielsweise kann auch die Reckgeschwindigkeit bestimmt werden. Die Ergebnisse der Messung können auf einem Speicherchip 206 gespeichert werden und über einen Sender 207 an ein externes Auswerteelement gesendet werden. Außerdem umfasst die Messvorrichtung mehrere Temperaturmesselemente oder Pyrometer 204, mit welchem beispielsweise der Energieeintrag in verschiedenen Heizschichten im Ofen der Blasmaschine bestimmt werden kann.

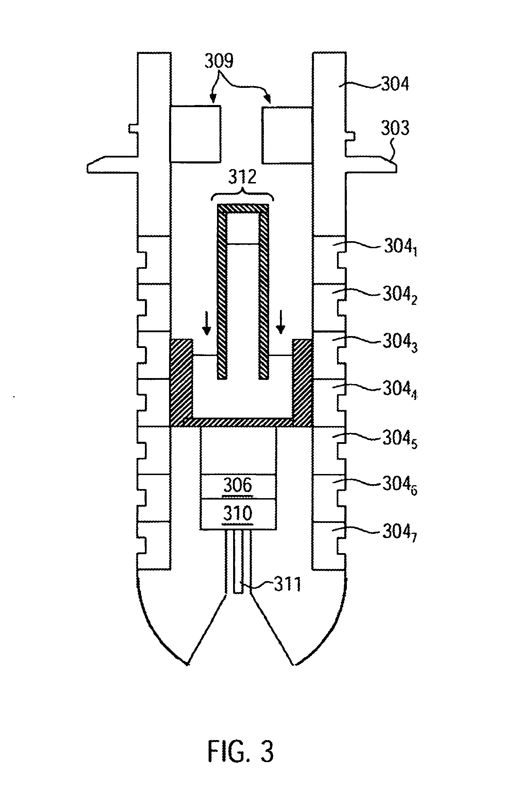

Fig. 3 zeigt eine andere beispielhafte Messvorrichtung, umfassend mehrere Temperaturmesselemente 304 sowie einen Drucksensor (Quecksilbersäule) 312. Die Pfeile in Fig. 3 deuten den Luftdruck, insbesondere den Blasdruck in einer Blasmaschine, an. Im Mündungsbereich des Vorformlingsdummys der Messvorrichtung ist eine Ausprägung 309 gezeigt. Diese Ausprägung oder Ablegekissen 309 dient zur Vermeidung, dass eine Reckstange auf die Messinstrumente eingefahren wird. Gleichzeitig kann Druckluft durch ein Durchgangsloch in der Ausprägung 309 in die Messvorrichtung eingebracht werden.

Die beispielhafte Messvorrichtung der Fig. 3 umfasst außerdem einen Speicherchip 306 zur Speicherung der von den Messelementen erfassten Parameterwerte, sowie eine Batterie 310, insbesondere eine Knopfzelle, zur Energieversorgung der Messvorrichtung. Außerdem ist in Fig. 3 ein USB-Anschluss 311 gezeigt, über welchen die Messvorrichtung mit einem Ausleseelement verbunden werden und über welchen am Speicherchip 306 gespeicherte Daten, insbesondere manuell also durch eine Bedienperson, an ein Auswerteelement übertragen werden können.

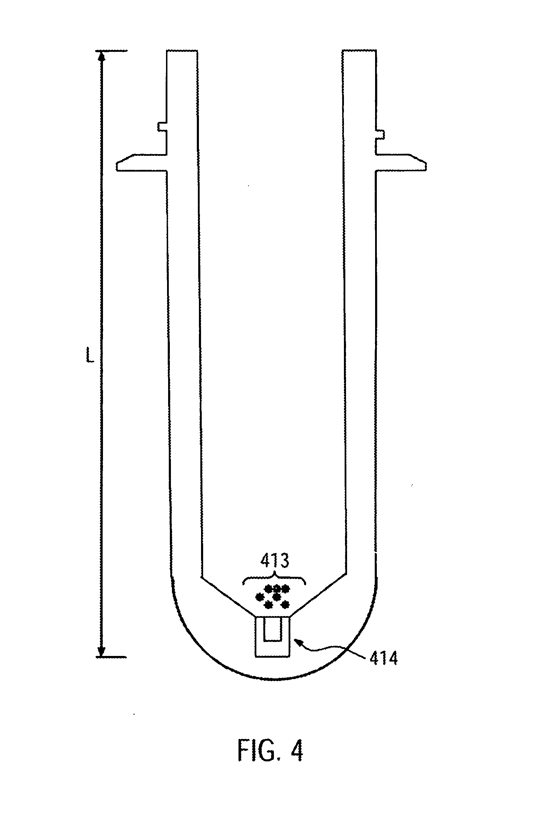

Fig. 4 zeigt eine weitere beispielhafte Messvorrichtung, umfassend ein Messelement 414 zur Bestimmung einer Keimanzahl. Dabei sind illustrativ einige Keime 413 gezeigt. In diesem Fall kann der Messdummy eine Länge L und einen Durchmesser aufweisen, die der Länge bzw. dem Durchmesser eines Artikels bzw. Behältnisses entspricht. Die Länge L kann insbesondere die maximale Länge sein, die eine Messvorrichtung aufweisen kann. Die maximale Länge kann beispielsweise durch eine untere Begrenzung in einer Blasmaschine, insbesondere im Ofen einer Blasmaschine oder durch eine Bodenform in der Blasform, bestimmt werden. Durch die maximale Länge L kann auch die Reinigung/Sterilisation am Boden simuliert bzw. kontrolliert werden.

Die beispielhafte Messvorrichtung aus Fig. 4 kann zum Prüfen der Aseptik von Blasmaschine (optional über die Etikettiermaschine) bis zum Füller/Verschließer verwendet werden. Wenn die geforderten Werte zur Keimanzahl nicht eingehalten werden, kann eine Fehlermeldung an ein Steuerungselement gesendet werden und ein Warnhinweis an eine Bedienperson ausgegeben oder Konzentrationen oder Einblasdrücke von Sterilisierungsmedien (Wasserstoffperoxid, Peressigsäure) oder Einblaspositionen von Sterilisierungseinheiten eingestellt werden.

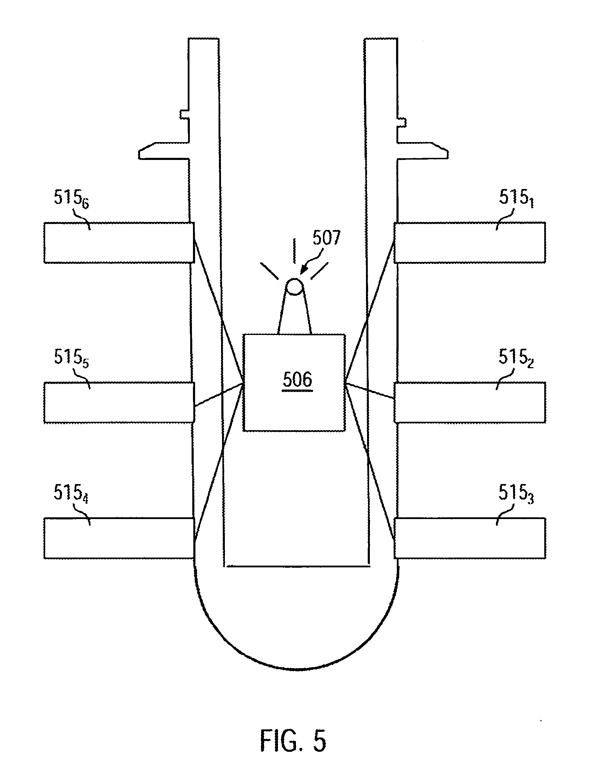

Fig. 5 zeigt eine weitere beispielhafte Messvorrichtung, umfassend mehrere Messstreifen 515-1 bis 515-6, welche zur Messung der Schließkraft einer Blasform verwendet werden. Die Schließkraft der Blasform sollte größer sein als die durch den Blasdruck erzeugte nach außen wirkende Kraft. Die Messstreifen können eine Dicke von weniger als 1/10 mm aufweisen. Als Drucksensoren 515 können insbesondere piezoresistive/elektrische Drucksensoren verwendet werden. Die Messstreifen 515 können auch verwendet werden, um die Temperatur der Blasform zu bestimmen. Die Messvorrichtung umfasst außerdem ein Speicherelement 506 und ein Sendeelement 507 zum Übertragen der Messwerte an ein Auswerteelement bzw. ein Steuerungselement. Alternativ oder zusätzlich zum Speicherelement 506 kann auch eine CPU vorgesehen sein.

Theoretisch wäre es denkbar, dass für eine Messung der Schließkraft einer Blasform keine Messvorrichtung, so wie sie hier beschrieben ist, verwendet wird. Man könnte die Sensoren auch an der Blasform selbst anbringen. Auf diese Weise könnte ebenso die Schließkraft zur Regelung der in der Blasmaschine vorhandenen Drücke verwendet werden. So kann beispielsweise der Druck, mit dem ein Druckkissen einer Blasform beaufschlagt wird, minimiert werden. Dies hat zur Folge, dass Druckluft eingespart werden kann.

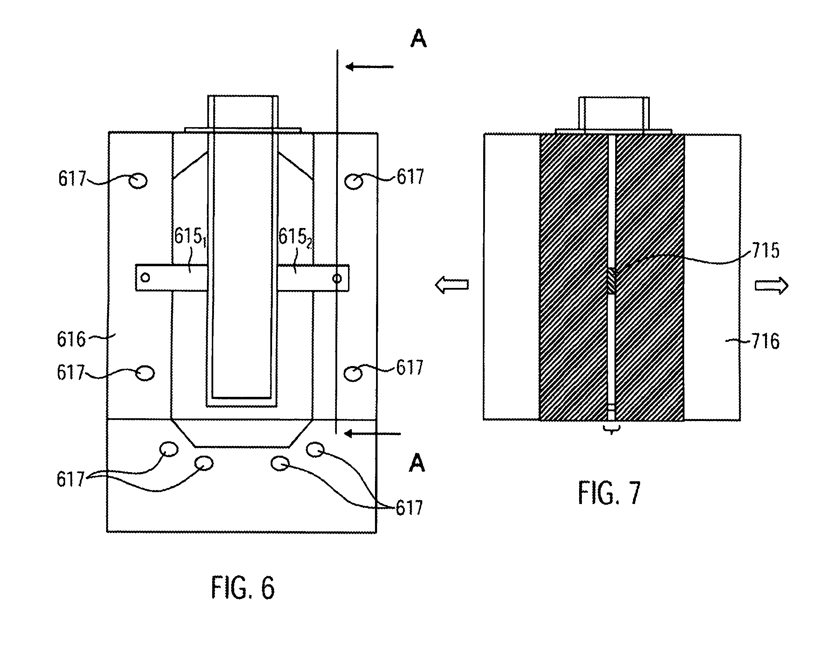

Fig. 6 und 7 zeigen beispielhafte Querschnitte einer Messvorrichtung in einer Blasform 616 bzw. 716. Die beispielhafte Messvorrichtung umfasst Messstreifen 615 bzw. 715 zum Messen der Schließkraft der Blasform 616, 716. Bei zu großer Schließkraft kann der Blasdruck, mit dem ein Druckkissen, das zwischen einer konturgebenden Formschale und einem Träger für diese angeordnet ist, beaufschlagt wird, reduziert werden. Bei zu kleiner Kraft können einzelne Blasformen 616, 716 auf ein höheres Druckkissenkraftniveau eingestellt werden. Sollte sich die Kraft dennoch nicht erhöhen, kann eine Fehlermeldung an eine Bedienperson ausgegeben werden. In Fig. 6 ist außerdem noch eine von unten zustellbare Bodenform gezeigt, sowie Bohrungen 617 für Temperiermedien. Fig. 7 zeigt einen Schnitt längs der A-A-Achse aus Fig. 6. Die zwei Pfeile in Fig. 7 deuten die Öffnungsbewegung der zwei Blasformhälften an. Der Formspalt zwischen den Blasformen sollte bei Nicht-Beaufschlagen des Druckkissens kleiner als 0,5 mm sein. Bei Beaufschlagung des Druckkissens mit Druckluft sollte der Formspalt geschlossen werden.

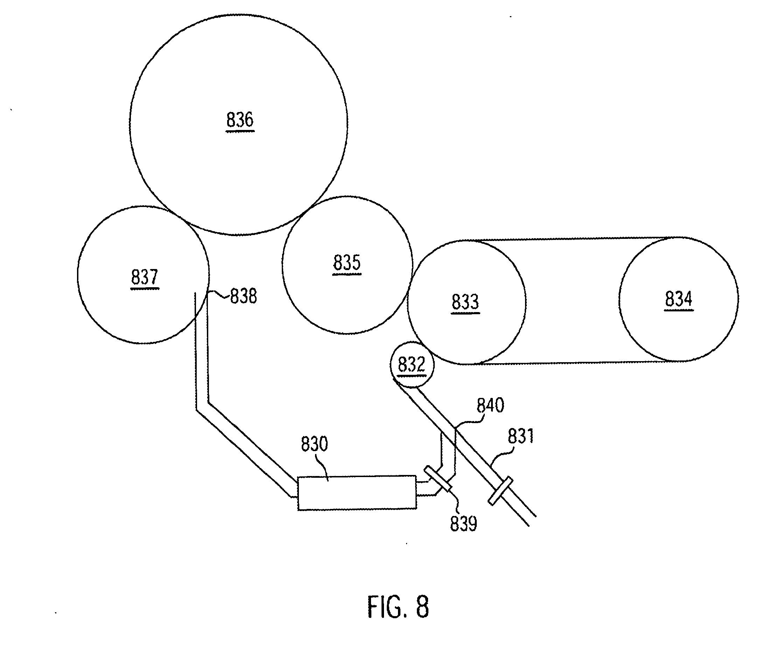

Fig. 8 zeigt ein beispielhaftes System, in dem eine oben beschriebene Messvorrichtung verwendet werden kann. Insbesondere kann eine oder mehrere Messvorrichtung(en) in einem Vertikalförderer 830 zu einer Pufferstrecke geführt werden, welche am Ende einen Stopper 839 aufweist. Bei Bedarf kann dieser Stopper 839 deaktiviert werden und eine Messvorrichtung kann über eine Schleuse 840 beispielsweise in die normale Pufferstrecke 831 für Preforms eingebracht werden. Über die normale Pufferstrecke 831 und Einlaufräder 832 kann die Messvorrichtung beispielsweise in die Blasmaschine 833, 834, 835, 836 eingebracht werden. Aus dem Auslaufrad 837 kann die Messvorrichtung an einem Ausschleusepunkt 838 auch wieder ausgeschleust werden. Der Ausschleusepunkt 838 kann aber auch an einer anderen Position des Systems vorgesehen oder angebracht sein.

Die Messvorrichtungen können insbesondere in festgelegten oder vorherbestimmten Zeitintervallen, insbesondere regelmäßig, in die Blasmaschine 833, 834, 835, 836 eingebracht werden.

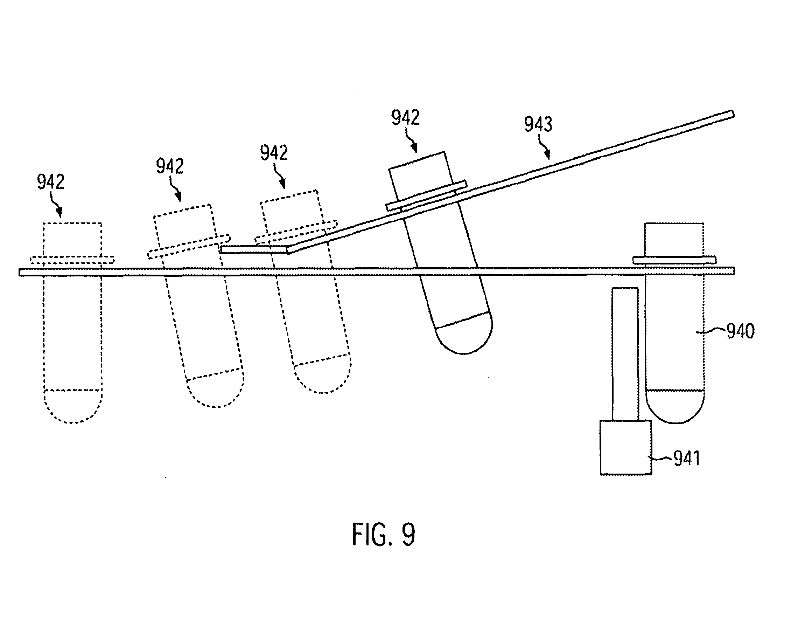

Fig. 9 zeigt Details über die Einschleuseeinrichtung der Fig. 8. Die herkömmlichen Vorformlinge 940 der Blasmaschine können durch einen Vorformlingsstopper 941 temporär zurückgehalten werden. Währenddessen können die Messvorrichtungen 942 über eine Einschleuseeinrichtung 943 in die normale Pufferstrecke für Vorformlinge eingebracht werden. Die in Fig. 9 gezeigte Pufferstrecke, an der der Vorformlingsstopper angeordnet ist, ist beispielsweise in einem Winkel zwischen 20° und 30° zur Horizontalen geneigt. Der Winkel, den die Pufferstrecke mit der Zuführung der Messvorrichtungen einschließt, beträgt beispielsweise zwischen 5° und 45°.

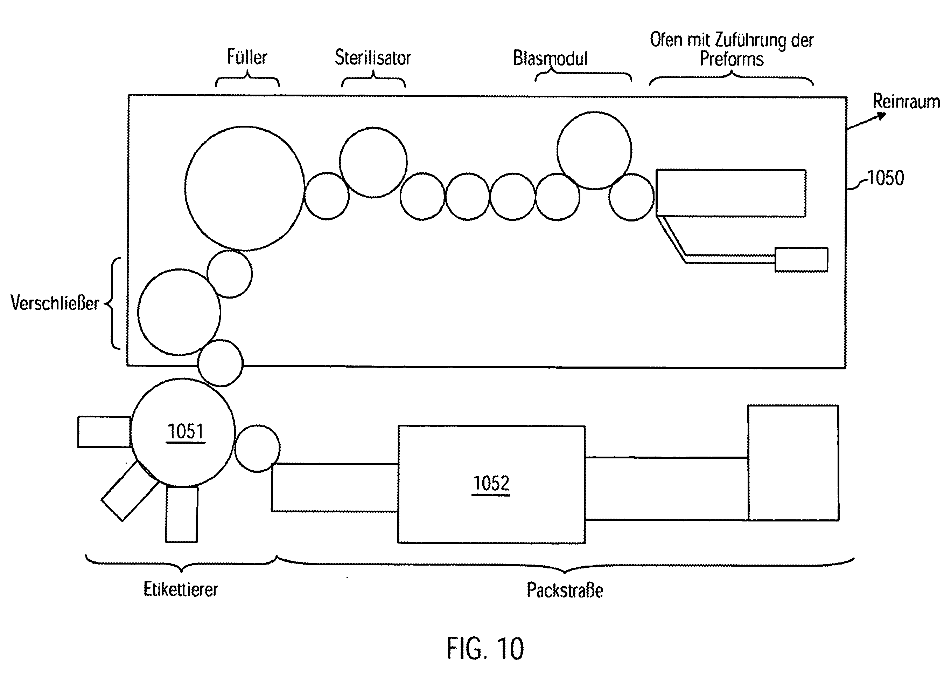

Fig. 10 zeigt eine beispielhafte Anlage, für welche eine oben beschriebene Messvorrichtung verwendet werden kann. Insbesondere ist ein Reinraum 1050 gezeigt, umfassend eine Blasmaschine und eine Abfüllmaschine. Nach einem Verschließer können die Artikel einer Etikettiervorrichtung 1051 und schließlich einer Packstraße 1052 zugeführt werden.

Eine Messvorrichtung kann sowohl in einem Testlauf vorab durch die Anlage bewegt werden, als auch inline, also während der Produktion. Im letzteren Fall können die Einstellungen der Parameter der Anlage während des Betriebes überprüft und gegebenenfalls geregelt werden. Es kann die Produktion auch gestoppt werden und dann eine oben beschriebene Messvorrichtung durch die Anlage transportiert werden.

Es versteht sich, dass in den zuvor beschriebenen Ausführungsbeispielen genannte Merkmale nicht auf diese speziellen Kombination beschränkt sind und auch in beliebigen anderen Kombinationen möglich sind. Insbesondere kann eine Messvorrichtung mehrere Messelemente umfassen, welche gleiche oder unterschiedliche Parameter erfassen können.

## Patentansprüche

1. Messvorrichtung zum Bestimmen wenigstens eines Parameterwertes für den Betrieb einer Blasmaschine (833; 834; 835; 836), einer Abfüllmaschine und/oder einer Etikettiervorrichtung (1051), umfassend:
wenigstens ein Messelement zum Bestimmen des wenigstens einen Parameterwertes,
**dadurch gekennzeichnet, dass**
die Messvorrichtung einen Vorformlingsdummy umfasst,
wobei das wenigstens eine Messelement im und/oder am Vorformlingsdummy angeordnet ist.

2. Messvorrichtung nach Anspruch 1, außerdem umfassend ein Sendeelement (107; 207; 507) zum Senden des wenigstens einen vom Messelement bestimmten Parameterwertes an ein Auswerteelement

3. Messvorrichtung nach Anspruch 1 oder 2, außerdem umfassend ein Speicherelement (106; 206; 306; 506) zum Speichern des wenigstens einen vom Messelement bestimmten Parameterwertes.

4. Messvorrichtung nach Anspruch 3, außerdem umfassend eine Schnittstelle, insbesondere eine USB-Schnittstelle (311), zum Verbinden des Speicherelements (106; 206; 306; 506) mit einem Auswerteelement und/oder einem externen Speicherelement.

5. Messvorrichtung nach einem der vorangegangenen Ansprüche, außerdem umfassend ein Energieversorgungselement (310) zum Versorgen des wenigstens einen Messelements, des Sendeelements (107; 207; 507), des Speicherelements (106; 206; 306; 506) und/oder der Schnittstelle mit elektrischer Energie.

6. Messvorrichtung nach einem der vorangegangenen Ansprüche, wobei der wenigstens eine Parameterwert ein Druckwert, ein Temperaturwert, ein Wert einer Kraft, ein Wert eines Momentes, ein Positionswert, ein Strahlungswert, eine Zeitdauer, eine Durchflussmenge, ein Formatwert, ein Geschwindigkeitswert und/oder eine Keimanzahl ist.

7. Messvorrichtung nach einem der vorangegangenen Ansprüche, wobei die Messvorrichtung außerdem eine oder mehrere im und/oder am Vorformlingsdummy angebrachte Einstelleinrichtungen umfassen, die so ausgebildet sind, dass bei dem Transport der Messvorrichtung durch eine Abfüllanlage bestimmte Behandlungseinheiten auf ein anderes Format umgestellt werden können.

8. Verfahren zum Bestimmen wenigstens eines Parameterwertes für den Betrieb einer Blasmaschine (833; 834; 835; 836), einer Abfüllmaschine und/oder einer Etikettiervorrichtung (1051), umfassend die Schritte:
Bereitstellen einer Messvorrichtung nach einem der vorangegangenen Ansprüche;
Einbringen der Messvorrichtung in die Blasmaschine (833; 834; 835; 836), die Abfüllmaschine und/oder die Etikettiervorrichtung (1051); und
Bestimmen des wenigstens einen Parameterwertes.

9. Verfahren nach Anspruch 8, wobei die Messvorrichtung durch die Blasmaschine (833; 834; 835; 836), die Abfüllmaschine und/oder die Etikettiervorrichtung (1051) bewegt wird.

10. Verfahren nach Anspruch 9, wobei die Messvorrichtung in der Blasmaschine (833; 834; 835; 836), der Abfüllmaschine und/oder der Etikettiervorrichtung (1051) wenigstens teilweise durch eine Transportvorrichtung bewegt wird, mit welcher im Betrieb die zu bearbeitenden Artikel bewegt werden.

11. Verfahren nach einem der Ansprüche 8 bis 10, wobei die Messvorrichtung in der Blasmaschine (833; 834; 835; 836), der Abfüllmaschine und/oder der Etikettiervorrichtung (1051) wenigstens teilweise durch ein Element bearbeitet wird, mit welchem die zu bearbeitenden Artikel im Betrieb bearbeitet werden.

12. Verfahren nach einem der Ansprüche 8 bis 11, wobei mehrere Messvorrichtungen in die Blasmaschine (833; 834; 835; 836), die Abfüllmaschine und/oder die Etikettiervorrichtung (1051) eingebracht werden, insbesondere wobei jede der Messvorrichtungen den Wert eines anderen Parameters bestimmt.

13. Verfahren nach einem der Ansprüche 8 bis 12, außerdem umfassend ein Übermitteln des wenigstens einen Parameterwertes an ein Auswerteelement.

14. Verfahren nach einem der Ansprüche 8 bis 13, wobei der wenigstens eine bestimmte Parameterwert zur Regelung der Blasmaschine (833; 834; 835; 836), der Abfüllmaschine und/oder der Etikettiervorrichtung (1051) verwendet wird.

15. Verfahren nach Anspruch 14, wobei eine oder mehrere Behandlungseinheiten der Blasmaschine (833; 834; 835; 836), der Abfüllmaschine und/oder der Etikettiervorrichtung (1051), insbesondere gleichartige Behandlungseinheiten, insbesondere unabhängig voneinander, basierend auf dem wenigstens einen bestimmten Parameterwert geregelt werden.

## Claims

1. Measuring device for determining at least one parameter value for the operation of a blow molding machine (833; 834; 835; 836), a filling machine, and/or a labeling device (1051), comprising:
at least one measuring element for determining the at least one parameter value,
**characterized in that**
the measuring device comprises a preform dummy,
wherein the at least one measuring element is arranged in and/or at the preform dummy.

2. Measuring device according to claim 1, moreover comprising a transmitting element (107; 207; 507) for transmitting the at least one parameter value determined by the measuring element to an evaluation element.

3. Measuring device according to claim 1 or 2, moreover comprising a storage element (106; 206; 306; 506) for storing the at least one parameter value determined by the measuring element.

4. Measuring device according to claim 3, moreover comprising an interface, in particular a USB interface (311), for connecting the storage element (106; 206; 306; 506) with an evaluation element and/or an external storage element.

5. Measuring device according to one of the preceding claims, moreover comprising a power supply element (310) for supplying the at least one measuring element, the transmitting element (107; 207; 507), the storage element (106; 206; 306; 506), and/or the interface with electric energy.

6. Measuring device according to one of the preceding claims, wherein the at least one parameter value is a pressure value, a temperature value, a value of a force, a value of a moment, a position value, a radiation value, a period, a flow rate, a format value, a speed value, and/or a number of germs.

7. Measuring device according to one of the preceding claims, wherein the measuring device moreover comprises one or several adjustment means attached in and/or at the preform dummy and embodied such that certain treatment units can be adjusted to another format during the transport of the measuring device through a filling plant.

8. Method of determining at least one parameter value for the operation of a blow molding machine (833; 834; 835; 836), a filling machine, and/or a labeling device (1051), comprising the steps of:
providing a measuring device according to one of the preceding claims;
introducing the measuring device into the blow molding machine (833; 834; 835; 836), the filling machine, and/or the labeling device (1051); and
determining the at least one parameter value.

9. Method according to claim 8, wherein the measuring device is moved through the blow molding machine (833; 834; 835; 836), the filling machine, and/or the labeling device (1051).

10. Method according to claim 9, wherein the measuring device is moved in the blow molding machine (833; 834; 835; 836), the filling machine, and/or the labeling device (1051) at least partially by a transport device by means of which the articles to be processed are moved in operation.

11. Method according to one of claims 8 to 10, wherein the measuring device in the blow molding machine (833; 834; 835; 836), the filling machine, and/or the labeling device (1051) is at least partially processed by an element by means of which the articles to be processed are processed in operation.

12. Method according to one of claims 8 to 11, wherein several measuring devices are introduced into the blow molding machine (833; 834; 835; 836), the filling machine, and/or the labeling device (1051), in particular wherein each of the measuring devices determines the value of another parameter.

13. Method according to one of claims 8 to 12, moreover comprising transmitting the at least one parameter value to an evaluation element.

14. Method according to one of claims 8 to 13, wherein the at least one determined parameter value is used for controlling the blow molding machine (833; 834; 835; 836), the filling machine, and/or the labeling device (1051).

15. Method according to claim 14, wherein one or several treatment units of the blow molding machine (833; 834; 835; 836), the filling machine, and/or the labeling device, in particular similar treatment units, are controlled based on the at least one determined parameter value, in particular independent of each other.

## Revendications

1. Dispositif de mesure pour déterminer au moins une valeur de paramètre pour le fonctionnement d'une machine de moulage par soufflage (833; 834; 835; 836), d'une machine de remplissage et/ou d'un dispositif d'étiquetage (1051), comprenant :
au moins un élément de mesure pour déterminer ladite au moins une valeur de paramètre,
**caractérisé en ce que**
le dispositif de mesure comprend une préforme factice,
ledit au moins un élément de mesure étant agencé dans et/ou sur la préforme factice.

2. Dispositif de mesure selon la revendication 1, comprenant, en outre, un élément émetteur (107; 207; 507) pour émettre et envoyer ladite au moins une valeur de paramètre déterminée par l'élément de mesure, à un élément de traitement de données.

3. Dispositif de mesure selon la revendication 1 ou la revendication 2, comprenant, en outre, un élément de mémoire (106; 206; 306; 506) pour la mémorisation de ladite au moins une valeur de paramètre déterminée par l'élément de mesure.

4. Dispositif de mesure selon la revendication 3, comprenant, en outre, une interface, notamment une interface USB (311), pour relier l'élément de mémoire (106; 206; 306; 506) à un élément de traitement de données et/ou à un élément de mémoire externe.

5. Dispositif de mesure selon l'une des revendications précédentes, comprenant, en outre, un élément d'alimentation en énergie (310) pour alimenter en énergie électrique ledit au moins un élément de mesure, l'élément émetteur (107; 207; 507), l'élément de mémoire (106; 206; 306; 506) et/ou l'interface.

6. Dispositif de mesure selon l'une des revendications précédentes, dans lequel ladite au moins une valeur de paramètre est une valeur de pression, une valeur de température, une valeur d'une force, une valeur d'un couple, une valeur de position, une valeur de rayonnement, une durée, un débit, une valeur de format, une valeur de vitesse et/ou un nombre de germes.

7. Dispositif de mesure selon l'une des revendications précédentes, dans lequel le dispositif de mesure comprend, en outre, un ou plusieurs dispositifs de réglage placés dans et/ou sur la préforme factice, qui sont configurés de telle façon que lors du transport du dispositif de mesure à travers une installation de remplissage, des unités de traitement déterminées peuvent être réglées à un autre format.

8. Procédé pour déterminer au moins une valeur de paramètre pour le fonctionnement d'une machine de moulage par soufflage (833; 834; 835; 836), d'une machine de remplissage et/ou d'un dispositif d'étiquetage (1051), comprenant les étapes suivantes :
fourniture et préparation d'un dispositif de mesure selon l'une des revendications précédentes ;
introduction du dispositif de mesure dans la machine de moulage par soufflage (833; 834; 835; 836), la machine de remplissage et/ou le dispositif d'étiquetage (1051) ; et
détermination de ladite au moins une valeur de paramètre.

9. Procédé selon la revendication 8, d'après lequel le dispositif de mesure est déplacé à travers la machine de moulage par soufflage (833; 834; 835; 836), la machine de remplissage et/ou le dispositif d'étiquetage (1051).

10. Procédé selon la revendication 9, d'après lequel le dispositif de mesure est déplacé dans la machine de moulage par soufflage (833; 834; 835; 836), la machine de remplissage et/ou le dispositif d'étiquetage (1051), au moins partiellement, par un dispositif de transport avec lequel les articles à traiter sont déplacés en cours de fonctionnement.

11. Procédé selon l'une des revendications 8 à 10, d'après lequel le dispositif de mesure dans la machine de moulage par soufflage (833; 834; 835; 836), la machine de remplissage et/ou le dispositif d'étiquetage (1051) est traité au moins partiellement par un élément avec lequel les articles à traiter sont traités en cours de fonctionnement.

12. Procédé selon l'une des revendications 8 à 11, d'après lequel plusieurs dispositifs de mesure sont placés dans la machine de moulage par soufflage (833; 834; 835; 836), la machine de remplissage et/ou le dispositif d'étiquetage (1051), chacun des dispositifs de mesure déterminant notamment respectivement la valeur d'un autre paramètre.

13. Procédé selon l'une des revendications 8 à 12, comprenant, en outre, la transmission de ladite au moins une valeur de paramètre à un élément de traitement de données.

14. Procédé selon l'une des revendications 8 à 13, d'après lequel ladite au moins une valeur de paramètre déterminée est utilisée pour la régulation de la machine de moulage par soufflage (833; 834; 835; 836), de la machine de remplissage et/ou du dispositif d'étiquetage (1051).

15. Procédé selon la revendication 14, d'après lequel une un ou plusieurs unités de traitement de la machine de moulage par soufflage (833; 834; 835; 836), de la machine de remplissage et/ou du dispositif d'étiquetage (1051), notamment des unités de traitement de même type, sont régulées, notamment indépendamment les unes des autres, en se basant sur ladite au moins une valeur de paramètre déterminée.
